# FASCICULE DE BREVET EUROPEEN

(11) **EP 4 286 280 B1**
(45) Date de publication et mention de la délivrance du brevet: **19.03.2025**
(21) Numéro de dépôt: 23172651.4
(22) Date de dépôt: 10.05.2023
(51) Int. Cl.: B64D 37/04, B64C 1/06, B64C 1/16, B64D 37/30

(54) **SYSTÈME DE FIXATION POUR AÉRONEF CONFIGURÉ POUR FIXER AU MOINS UN RÉSERVOIR PRÉVU POUR CONTENIR DE L HYDROGÈNE LIQUIDE**
BEFESTIGUNGSSYSTEM FÜR EIN FLUGZEUG, DAS ZUR BEFESTIGUNG MINDESTENS EINES TANKS KONFIGURIERT IST, DAS FÜR DIE AUFNAHME VON FLÜSSIGEM WASSERSTOFF BESTIMMT IST
AIRCRAFT ATTACHMENT SYSTEM CONFIGURED TO SECURE AT LEAST ONE RESERVOIR INTENDED TO CONTAIN LIQUID HYDROGEN

(30) Priorité: 31.05.2022 FR 2205214
(43) Date de publication de la demande: 06.12.2023
(73) Titulaire: Airbus Operations SAS, 31060 Toulouse (FR)
(72) Inventeur: MERTES, Anthony, 31060 TOULOUSE (FR); PHALIPPOU, Jérôme, 31060 TOULOUSE (FR)
(74) Mandataire: Gevers & Orès

(56) Documents cités:
- CN-A- 110 510 128
- DE-B3- 10 324 180
- FR-A1- 3 055 305
- US-A1- 2004 217 231
- US-A1- 2020 377 180
- US-A1- 2022 074 548

## Description

### Domaine technique

La présente invention concerne un système de fixation pour aéronef configuré pour fixer au moins un réservoir prévu pour contenir de l'hydrogène liquide.

### État de la technique

Pour se déplacer, un aéronef comporte des systèmes de propulsion comprenant au moins un moteur. Les systèmes de propulsion peuvent correspondre à des turboréacteurs ou des turbopropulseurs dans lesquels un moteur entraîne une hélice en rotation.

Les moteurs de ces systèmes de propulsion peuvent correspondre à des moteurs à combustion interne alimentés par de l'hydrogène liquide. Ces moteurs peuvent également correspondre à des moteurs électriques alimentés par des piles à combustibles. Afin alimenter ces moteurs, il est nécessaire d'embarquer des réservoirs à hydrogène liquide.

Ces réservoirs peuvent être embarqués l'un à côté de l'autre dans un tronçon de fuselage de l'aéronef. Pour être embarqués à bord de l'aéronef, les réservoirs demandent d'être fixés de manière sécurisée.

Document US2004217231 divulgue un système de fixation pour réservoirs d'hydrogène liquide dans un aéronef.

### Exposé de l'invention

La présente invention a pour objet de donner une solution à la fixation de réservoirs embarqués à bord de l'aéronef. Pour cela, elle concerne un système de fixation configuré pour fixer au moins un réservoir prévu pour contenir de l'hydrogène liquide, le ou les réservoirs présentant un centre de gravité, le système de fixation étant destiné à être intégré dans un corps de fuselage d'un aéronef, le système de fixation présentant un plan de symétrie verticale, le système de fixation étant lié à un repère orthogonal défini par un axe X destiné à être parallèle à un axe longitudinal du corps de fuselage, un axe Y horizontal et un axe Z vertical.

Selon l'invention, le système de fixation comprend :
- un caisson longitudinal s'étendant parallèlement à l'axe X, le caisson longitudinal présentant un plan médian vertical longitudinal confondu avec le plan de symétrie vertical du système de fixation, le caisson longitudinal présentant un plan médian horizontal destiné à comprendre le centre de gravité du ou des réservoirs, le caisson longitudinal comprenant au moins deux plaques longitudinales parallèles au plan de symétrie vertical,
- une structure supérieure fixée sur un côté supérieur du caisson longitudinal,
- une structure inférieure fixée sur un côté inférieur du caisson longitudinal,
- au moins deux ossatures de fixation réparties le long de l'axe X, chacune des au moins deux ossatures de fixation comprenant symétriquement, de part et d'autre du plan de symétrie vertical, deux premiers dispositifs de fixation configurés pour lier un réservoir à la structure supérieure par une liaison pivot glissant d'axe pivot parallèle à l'axe X, l'axe pivot étant configuré pour être compris dans un plan perpendiculaire à l'axe Z comportant le centre de gravité du réservoir ;
le système de fixation comprenant en outre symétriquement, de part et d'autre du plan de symétrie verticale :
- au moins deux deuxièmes dispositifs de fixation symétriques configurés pour lier un premier point de fixation du réservoir au caisson longitudinal, le premier point de fixation étant configuré pour être compris dans le plan médian horizontal du caisson longitudinal,
- au moins deux troisièmes dispositifs de fixation symétriques configurés pour lier un deuxième point de fixation du réservoir à la structure inférieure.

Ainsi, grâce aux trois dispositifs de fixation pour chaque réservoir, le système de fixation permet d'assurer la fixation d'un ou deux réservoirs tout en assurant une répartition des charges exercées par le ou les réservoirs.

Selon une première particularité, chacun des deux premiers dispositifs de fixation comprend une potence double fixée sur la structure supérieure, la potence double comportant une première poutre et une deuxième poutre formant un V, le V étant compris dans un plan perpendiculaire à l'axe X, la première poutre et la deuxième poutre comportant chacune une première extrémité, la première extrémité de la première poutre et la première extrémité de la deuxième poutre se rejoignant à un sommet du V,
la première poutre présentant une deuxième extrémité fixée à une extrémité supérieure de la structure supérieure,
la deuxième poutre présentant une deuxième extrémité fixée à la structure supérieure de façon que la deuxième poutre soit parallèle à l'axe Y,
le sommet du V étant configuré pour être fixé à une chape d'axe X fixée au réservoir.

Selon une deuxième particularité, chacun des au moins deux deuxièmes dispositifs de fixation comprend :
- une première plaque double en forme de triangle compris dans un plan médian horizontal du caisson longitudinal, la première plaque double étant fixée au caisson longitudinal par un côté de fixation du triangle de la première plaque double, le côté de fixation étant opposé à un sommet de fixation du triangle,
- deux premières biellettes parallèles à l'axe X, les deux premières biellettes présentant une première extrémité liée au sommet de fixation du triangle par une première liaison pivot d'axe Z, les deux premières biellettes présentant une deuxième extrémité destinée à être liée par une deuxième liaison pivot d'axe Z à une plaque horizontale fixée au réservoir.

Par ailleurs, chacun des au moins deux deuxièmes dispositifs de fixation comprend une cornière de fixation, la cornière de fixation fixant la première plaque double à une plaque longitudinale respective du caisson longitudinal.

Selon une troisième particularité, chacun des au moins deux troisièmes dispositifs de fixation comprend :
- une deuxième plaque double en forme de triangle compris dans un plan vertical perpendiculaire à l'axe X, la deuxième plaque double étant fixée à la structure inférieure par un côté de fixation du triangle de la deuxième plaque double, le côté de fixation étant opposé à un sommet de fixation du triangle,
- deux deuxièmes biellettes parallèles à l'axe Y, les deux deuxièmes biellettes présentant une première extrémité liée au sommet de fixation du triangle par une première liaison pivot d'axe X, les deux deuxièmes biellettes présentant une deuxième extrémité destinée à être liée par une deuxième liaison pivot d'axe X à une plaque verticale fixée au réservoir.

De plus, les premières extrémités des deux premières biellettes prennent en sandwich le sommet de fixation du triangle de la première plaque double, les deuxièmes extrémités des deux premières biellettes étant configurées pour prendre en sandwich la plaque horizontale fixée au réservoir,
les premières extrémités des deux deuxièmes biellettes prenant en sandwich le sommet de fixation du triangle de la deuxième plaque double, les deuxièmes extrémités des deux deuxièmes biellettes étant configurées pour prendre en sandwich la plaque verticale fixée au réservoir.

Par ailleurs, la structure supérieure comprend une paire de panneaux supérieurs s'écartant symétriquement de part et d'autre du plan de symétrie vertical à partir d'une arête longitudinale respective du côté supérieur du caisson longitudinal jusqu'à un bord supérieur, chacun des panneaux supérieurs comportant des raidisseurs perpendiculaires à l'axe X, chacun des deux premiers dispositifs de fixation de chacune des au moins deux ossatures de fixation étant fixé à un raidisseur d'un panneau supérieur respectif,
la structure inférieure comprenant une paire de panneaux inférieurs s'écartant symétriquement de part et d'autre du plan de symétrie vertical à partir d'une arête longitudinale respective du côté inférieur du caisson longitudinal, chacun des panneaux inférieurs comportant des raidisseurs perpendiculaires à l'axe X, chacun des au moins deux troisièmes dispositifs de fixation étant fixé à un raidisseur d'un panneau inférieur respectif.

En outre, la structure supérieure comprend des arceaux fixés au bord supérieur des panneaux supérieurs pour relier entre eux les panneaux supérieurs, chacun des arceaux étant compris dans un plan comprenant un raidisseur de chacun des panneaux supérieurs.

Avantageusement, chacune des au moins deux ossatures de fixation comprend une ferme entre les deux panneaux supérieurs, la ferme comportant :
- un entrait fixé aux deux panneaux supérieurs dans le prolongement de la deuxième poutre de la potence double du premier dispositif de fixation de part et d'autre du plan de symétrie vertical,
- deux contrefiches symétriquement disposées selon le plan de symétrie vertical, chacune des deux contrefiches présentant une première extrémité fixée à un arceau qui se trouve dans un plan comprenant la potence double, chacune des deux contrefiches présentant une deuxième extrémité fixée au panneau supérieur respectif.

Par ailleurs, le caisson longitudinal comprend un voile central liant les deux plaques longitudinales, le voile central étant compris dans le plan médian horizontal du caisson longitudinal entre deux premières plaques doubles de deux deuxièmes dispositifs de fixation symétriques par rapport au plan de symétrie vertical.

Selon une particularité, le voile central présente deux bords latéraux parallèles à l'axe X et perpendiculaires à l'axe Y, les deux bords latéraux étant fixés aux plaques longitudinales du caisson longitudinal.

De plus, le caisson longitudinal comprend au moins une paire de voiles transversaux associés à un voile central ou à chacun des voiles centraux, la ou les paires de voiles transversaux comportant un premier voile transversal et un deuxième voile transversal reliant les deux plaques longitudinales de part et d'autre du ou des voiles centraux associés selon l'axe X, le premier voile transversal et le deuxième voile transversal étant perpendiculaires à l'axe X.

L'invention concerne également un fuselage d'aéronef comprenant un système de fixation tel que décrit ci-dessus, le système de fixation étant intégré dans le fuselage.

L'invention concerne également un aéronef, en particulier un avion de transport, comportant un fuselage intégrant un système de fixation tel que spécifié ci-dessus.

### Brève description des figures

Les figures annexées feront bien comprendre comment l'invention peut être réalisée. Sur ces figures, des références identiques désignent des éléments semblables.
La figure 1 représente une vue en perspective d'un aéronef présentant un fuselage intégrant un système de fixation auquel sont fixés deux réservoirs.
La figure 2 représente une vue en perspective d'un système de fixation auquel sont fixés deux réservoirs.
La figure 3 représente une vue de derrière du système de fixation.
La figure 4 représente une vue en perspective d'une potence double du premier dispositif de fixation fixé sur un raidisseur d'un panneau supérieur.
La figure 5 représente une vue de derrière d'un mode de réalisation de la structure supérieure d'une ossature de fixation et du premier dispositif de fixation auquel sont fixés deux réservoirs.
La figure 6 représente une vue en perspective de deux ossatures de fixation d'un système de fixation auquel sont fixés deux réservoirs.
La figure 7 représente une vue en perspective d'une coupe horizontale et longitudinale du caisson longitudinal du système de fixation mettant en évidence un voile central, deux voiles transversaux et les deuxièmes dispositifs de fixation d'une ossature de fixation.
La figure 8 représente une vue en perspective d'un voile central et des deuxièmes dispositifs de fixation d'une ossature de fixation.
La figure 9 représente une vue en perspective des troisièmes dispositifs de fixation fixés sur des raidisseurs de panneaux inférieures.
La figure 10 représente une vue en perspective d'un troisième dispositif de fixation.

### Description détaillée

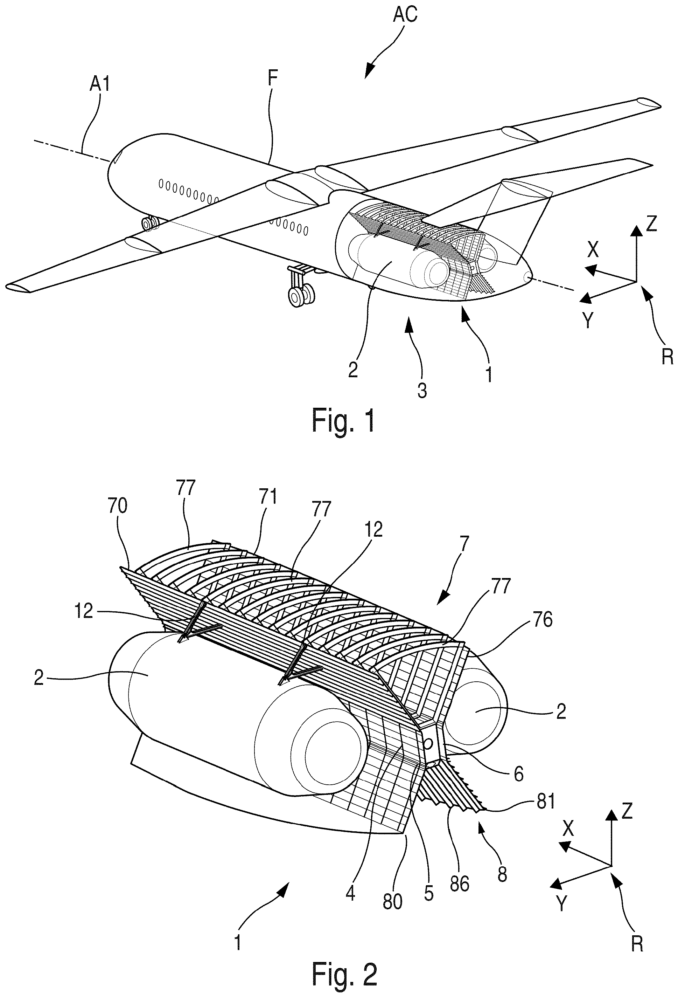

Le système de fixation 1 est destiné à être intégré dans le fuselage F d'un aéronef AC (figure 1). Le système de fixation 1 peut être rendu solidaire au fuselage F de l'aéronef AC.

Le système de fixation 1 représenté sur la figure 2 est liée à un repère orthogonal R défini par un axe X destiné à être parallèle à un axe longitudinal A1 du corps de fuselage 3 de l'aéronef AC dans lequel le système de fixation 1 est destiné à être intégré (Figure 1). Le repère orthogonal R est également défini par un axe Y et un axe Z. L'axe Y correspond à une direction transversale du système de fixation 1 perpendiculaire à l'axe X. L'axe Y est horizontal quand l'aéronef AC destiné à recevoir le corps de fuselage 3 intégrant le système de fixation 1 se trouve au sol. L'axe Z correspond à la direction verticale du système de fixation 1 perpendiculaire à l'axe X et à l'axe Y. On appelle « plan horizontal » un plan parallèle à l'axe X et à l'axe Y. Le système de fixation 1 comprend un plan de symétrie vertical P1. On appelle « plan de symétrie vertical P1 » le plan parallèle à l'axe X et à l'axe Z qui correspond au plan de symétrie vertical du système de fixation 1.

Les adjectifs « supérieur » et « inférieur » sont définis par rapport au sol sur lequel l'aéronef AC devant recevoir le système de fixation 1 est susceptible d'avancer. Un objet qualifié par l'adjectif « inférieur » se situe plus proche du sol qu'un objet qualifié par l'adjectif « supérieur ».

L'adjectif « latéral » qualifie une partie qui se situe d'un côté ou/et de l'autre du plan de symétrie vertical P1.

Le système de fixation 1 est configuré pour fixer au moins un réservoir 2 prévu pour contenir de l'hydrogène liquide. Le système de fixation 1 prévoit que deux réservoirs 2 peuvent être fixés l'un à côté de l'autre de part et d'autre du plan de symétrie vertical P1. Le ou les réservoirs 2 présentent un centre de gravité CG. On peut considérer que le centre de gravité CG du ou de chacun des réservoirs 2 reste sensiblement à la même position quelle que soit la quantité d'hydrogène liquide contenue dans le ou les réservoirs 2.

Le système de fixation 1 est destiné à être intégré dans un corps de fuselage 3 d'un aéronef AC.

Le système de fixation 1 comprend un caisson longitudinal 4, une structure supérieure 7 fixée sur un côté supérieur 9 du caisson longitudinal 4, une structure inférieure 8 fixée sur un côté inférieur 10 du caisson longitudinal 4.

Le caisson longitudinal 4 s'étend parallèlement à l'axe X.

Le caisson longitudinal 4 présente un plan médian vertical longitudinal P2 sensiblement confondu avec le plan de symétrie vertical P1 du système de fixation 1. Le caisson longitudinal 4 présente également un plan médian horizontal P3 destiné à comprendre le centre de gravité CG du ou des réservoirs 2. Le caisson longitudinal 4 comprend au moins deux plaques longitudinales 5 et 6 s'étendant selon l'axe X parallèlement au plan de symétrie vertical P1.

Le plan médian vertical longitudinal P2 correspond à un plan de symétrie vertical du caisson longitudinal 4 parallèle à l'axe longitudinal du caisson longitudinal 4.

Le plan médian horizontal P3 correspond à un plan de symétrie horizontal du caisson longitudinal 4.

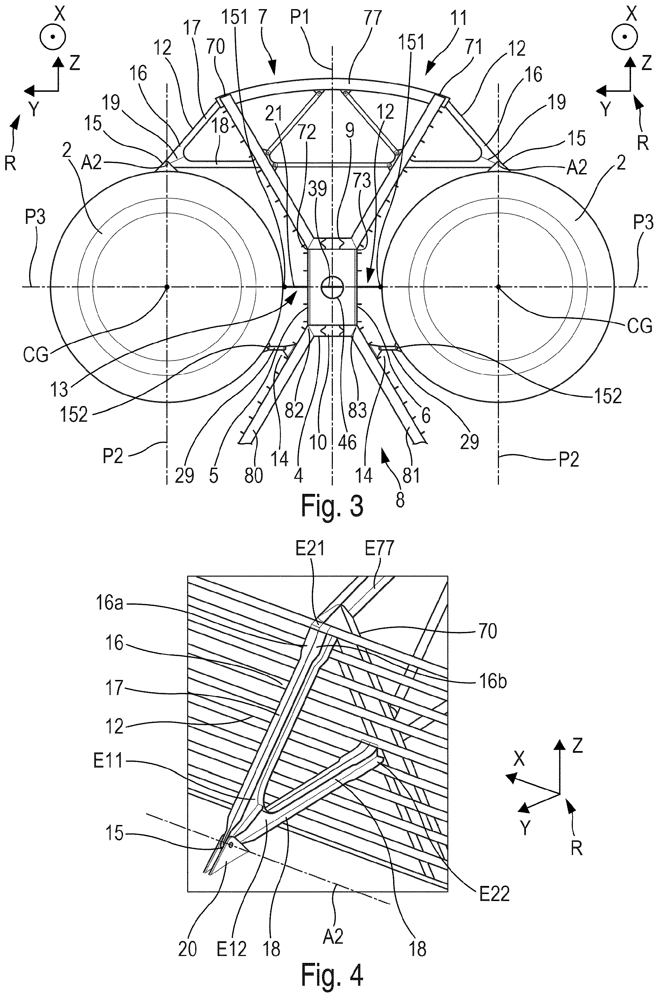

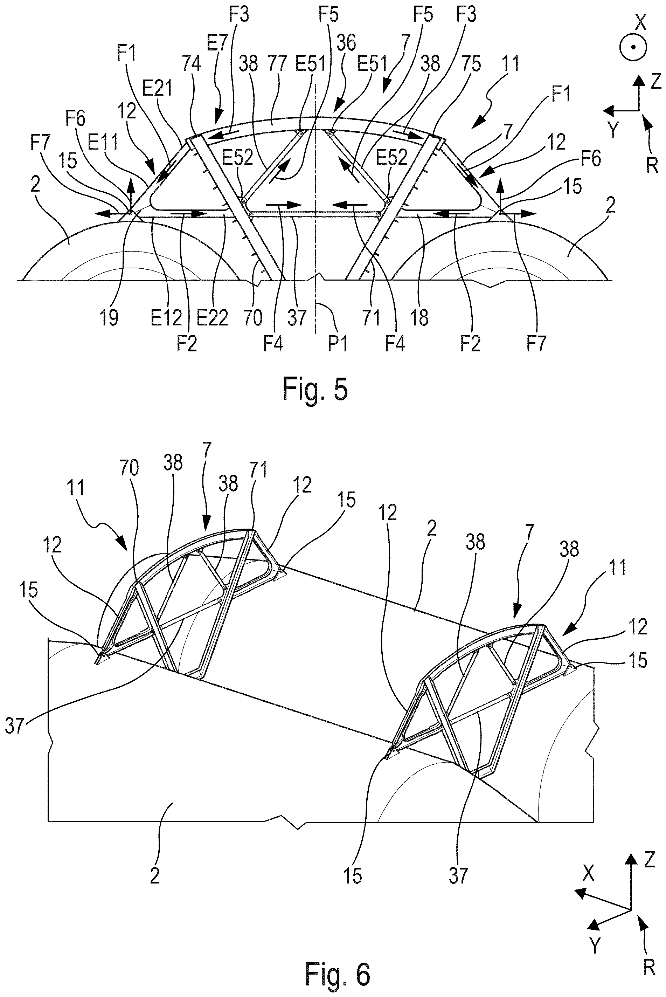

Le système de fixation 1 comprend également au moins deux ossatures de fixation 11 réparties le long de l'axe X (figure 6). Chacune des au moins deux ossatures de fixation 11 comprend symétriquement, de part et d'autre du plan de symétrie vertical P1, deux dispositifs de fixation 12 (figure 3).

Comme représenté sur la figure 3, chacune des au moins deux ossatures de fixation 11 comprend donc deux dispositifs de fixation 12 disposés symétriquement l'un par rapport à l'autre par rapport au plan de symétrie vertical P1.

Chacun des deux dispositifs de fixation 12 est configuré pour lier un réservoir 2 à la structure supérieure 7 par une liaison pivot glissant 15 d'axe pivot A2 parallèle à l'axe X. L'axe pivot A2 est configuré pour être compris dans un plan P2 perpendiculaire à l'axe Z comportant le centre de gravité CG du réservoir 2.

Chacun des deux dispositifs de fixation 12 est configuré pour permettre un transfert de charge F6 et F7 (figure 5) selon l'axe Y et l'axe Z.

Selon un mode de réalisation, chacun des deux dispositifs de fixation 12 comprend une potence double 16 fixée sur la structure supérieure 7.

Une potence double 16 comprend deux potences simples 16a et 16b accolées symétriquement l'une par rapport à l'autre selon un plan perpendiculaire à l'axe X (figure 4). Les efforts F1, F2 (figure 5) exercés sur la potence double 16 par le réservoir 2 fixé à un dispositif de fixation 12 sont donc divisés en deux chemins d'effort : une première partie des efforts F1, F2 s'exerce sur une première potence simple 16a et une deuxième partie des efforts F1, F2 s'exerce sur la deuxième potence simple 16b. Ainsi, s'il survient une rupture d'une des deux potences simples 16a ou 16b, l'autre potence simple 16b ou 16a (qui ne s'est pas rompue) a la capacité à reprendre tous les efforts F1 et F2. De préférence, les deux potences simples 16a, 16b ne sont pas fixées ensemble afin que, si une première potence simple venait à rompre, la rupture de cette première potence simple n'entraînerait pas la rupture de la deuxième potence simple.

La potence double 16 comporte une poutre 17 et une poutre 18 qui forment ensemble un V. Le V est compris dans un plan perpendiculaire à l'axe X. La poutre 17 comporte une extrémité E11 et la poutre 18 comportent une extrémité E12.

L'extrémité E11 de la poutre 17 et l'extrémité E12 de la poutre 18 se rejoignent à un sommet 19 du V. Le sommet 19 du V est configuré pour être fixé à une chape 20 d'axe X fixée au réservoir 2. La poutre 17 présente une extrémité E21 fixée à une extrémité supérieure E7 de la structure supérieure 7 (figure 4). La poutre 18 présente une extrémité E22 fixée à la structure supérieure 7 de façon que la poutre 18 soit sensiblement parallèle à l'axe Y.

Le système de fixation 1 comprend en outre symétriquement, de part et d'autre du plan de symétrie vertical P1 au moins deux dispositifs de fixation 13 et au moins deux dispositifs de fixation 14. Ainsi, le système de fixation 1 comprend au moins deux dispositifs de fixation 13 disposés symétriquement l'un par rapport à l'autre par rapport au plan de symétrie vertical P1 et deux dispositifs de fixation 14 disposés symétriquement l'un par rapport à l'autre par rapport au plan de symétrie vertical P1

Chacun des au moins deux dispositifs de fixation 13 est configuré pour lier chacun un point de fixation 151 du réservoir 2 au caisson longitudinal 4 (figure 3). Le point de fixation 151 est configuré pour être compris dans le plan médian horizontal P3 du caisson longitudinal 4.

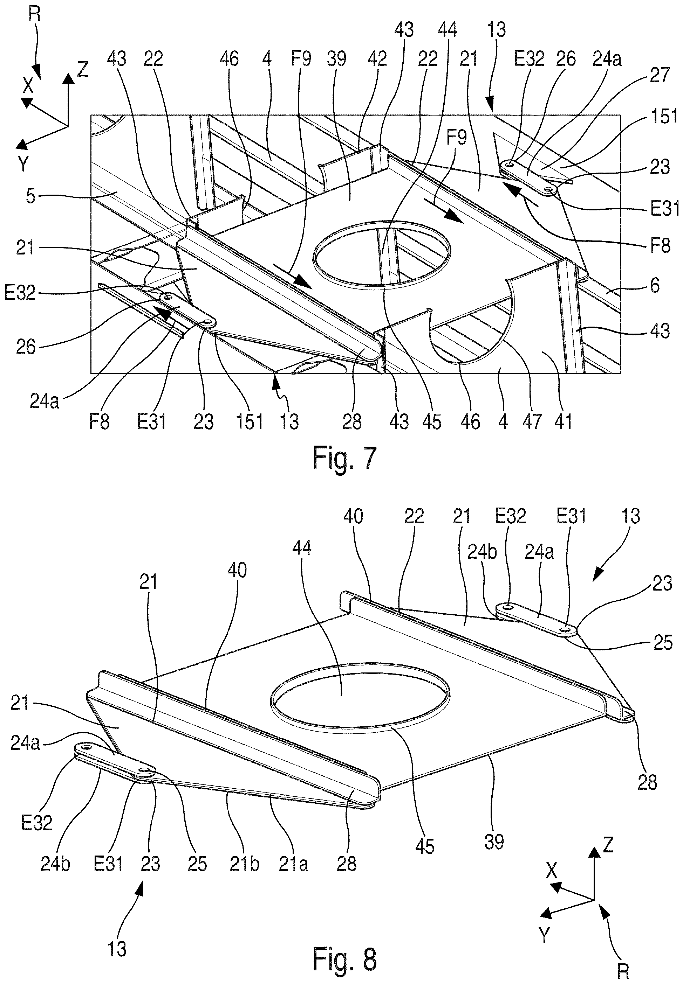

Chacun des au moins deux dispositifs de fixation 13 est configuré pour permettre un transfert de charges F8, F9 selon l'axe X (figure 7).

Ainsi, le centre de gravité CG du réservoir 2 ou de chacun des deux réservoirs 2 destinés à être fixés au système de fixation 1 est compris dans le plan médian horizontal P3 comprenant le point de fixation 151 de chacun des au moins deux dispositifs de fixation 13 symétriques ainsi que dans le plan P2 comprenant l'axe pivot A2 (figure 3). Cette disposition des deux plans P2 et P3 par rapport au centre de gravité CG permet de maintenir de manière efficace les réservoirs 2 fixés au système de fixation 1.

Selon un mode de réalisation, chacun des au moins deux dispositifs de fixation 13 comprend une plaque double 21 et deux biellettes 24a, 24b.

La plaque double 21 est en forme de triangle compris dans le plan médian horizontal P3 du caisson longitudinal 4 (figure 7 et figure 8). Cette plaque double 21 est fixée au caisson longitudinal 4 par un côté de fixation 22 du triangle de la plaque double 21. Ce côté de fixation 22 est opposé à un sommet de fixation 23 du triangle de la plaque double 21.

Avantageusement, chacun des au moins deux dispositifs de fixation 13 comprend une cornière de fixation 28. La cornière de fixation 28 fixe la plaque double 21 du dispositif de fixation 13 à une plaque longitudinale 5, 6 respectivement du caisson longitudinal 4. Ainsi, chacun des au moins deux dispositifs de fixation 13, disposés symétriquement l'un par rapport à l'autre par rapport au plan de symétrie vertical P1, comprend une cornière de fixation 28 fixant leur plaque double 21 respective à une plaque longitudinale 5, 6 respective.

Une plaque double 21 comprend deux plaques simples 21a et 21b accolées symétriquement et parallèlement l'une par rapport à l'autre selon un plan perpendiculaire à l'axe Y (figure 8). Les efforts exercés sur la plaque double 21 par le réservoir 2 fixé au dispositif de fixation 13 sont donc divisés en deux chemins d'effort : une première partie des efforts s'exerce sur une première plaque simple 21a et une deuxième partie des efforts s'exerce sur la deuxième plaque simple 21b. Ainsi, s'il survient une rupture d'une des deux plaques simples 21a ou 21b, l'autre plaque simple 21b ou 21a (qui ne s'est pas rompue) a la capacité à reprendre tous les efforts. De préférence, les deux plaques simples 21a, 21b ne sont pas fixées ensemble afin que, dans le cas où une première plaque simple venait à rompre, la rupture de cette première plaque simple n'entraînerait pas la rupture de la deuxième plaque simple.

Les deux biellettes 24a, 24b ont un axe longitudinal sensiblement parallèle à l'axe X. Les deux biellettes 24a, 24b présentent une extrémité E31 liée au sommet de fixation 23 du triangle de la plaque double 21 par une liaison 25 pivot d'axe Z. Les deux biellettes 24a, 24b présentent également une extrémité E32 destinée à être liée par une liaison 26 pivot d'axe Z à une plaque horizontale 27 fixée au réservoir 2 (figure 7). L'utilisation de deux biellettes 24a et 24b permet de diviser en deux chemins d'effort les efforts exercés sur les deux biellettes 24a et 24b par le réservoir 2 fixé au dispositif de fixation 13 : une première partie des efforts s'exerce sur une première biellette 24a et une deuxième partie des efforts s'exerce sur la deuxième biellette 24b. Ainsi, s'il survient une rupture d'une des deux biellettes 24a ou 24b, l'autre biellette 24b ou 24a (qui ne s'est pas rompue) a la capacité à reprendre tous les efforts. De préférence, les extrémités E31 des deux biellettes 24a et 24b prennent en sandwich le sommet de fixation 23 du triangle de la plaque double 21. Les extrémités E32 des deux biellettes 24a et 24b sont configurées pour prendre en sandwich la plaque horizontale 27 fixée au réservoir 2.

Chacun des au moins deux dispositifs de fixation 14 est configuré pour lier chacun un point de fixation 152 du réservoir 2 à la structure inférieure 8 (figure 3).

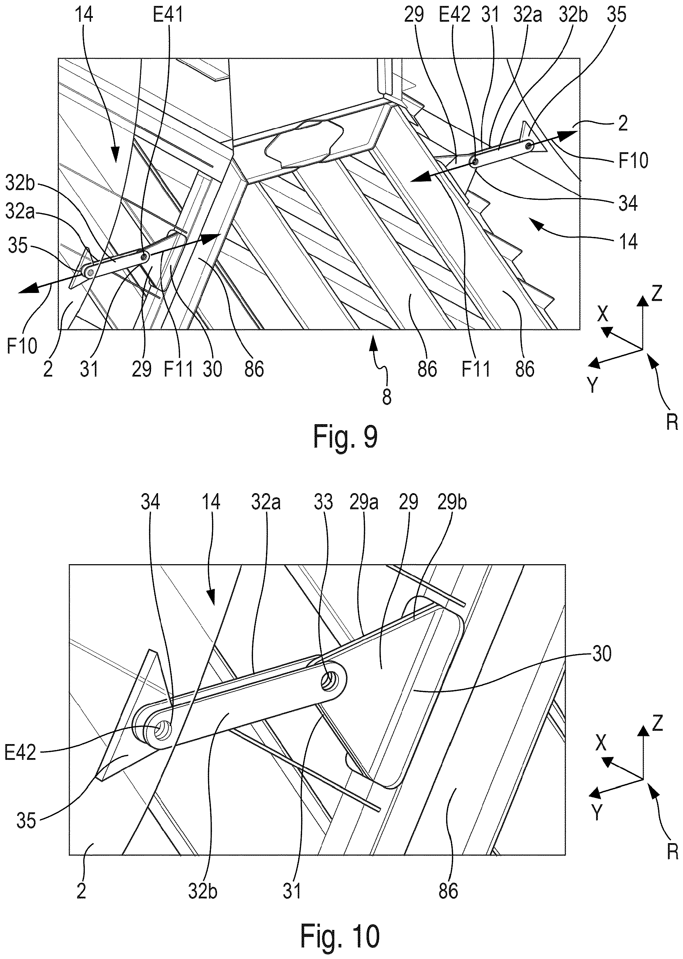

Chacun des au moins deux dispositifs de fixation 14 est configuré pour permettre un transfert de charges F10, F11 selon l'axe Y (figure 9).

Selon un mode de réalisation, chacun des au moins deux dispositifs de fixation 14 comprend une plaque double 29 et deux biellettes 32a, 32b.

La plaque double 29 est en forme de triangle compris dans un plan vertical perpendiculaire à l'axe X. La plaque double 29 est fixée à la structure inférieure 8 par un côté de fixation 30 du triangle de la plaque double 29. Le côté de fixation 30 est opposé à un sommet de fixation 31 du triangle de la plaque double 29.

Comme pour la plaque double 21, la plaque double 29 comprend deux plaques simples 29a et 29b accolées symétriquement et parallèlement l'une par rapport à l'autre selon un plan perpendiculaire à l'axe X (figure 10). Les efforts exercés sur la plaque double 29 par le réservoir 2 fixé à un dispositif de fixation 14 sont donc divisés en deux chemins d'effort : une première partie des efforts s'exerce sur une première plaque simple 29a et une deuxième partie des efforts s'exerce sur la deuxième plaque simple 29b. Ainsi, s'il survient une rupture d'une des deux plaques simples 29a ou 29b, l'autre plaque simple 29b ou 29a (qui ne s'est pas rompue) a la capacité à reprendre tous les efforts. De préférence, les deux plaques simples 29a, 29b ne sont pas fixées ensemble afin que, dans le cas où une première plaque simple venait à rompre, la rupture de cette première plaque simple n'entraînerait pas la rupture de la deuxième plaque simple.

Les deux biellettes 32a, 32b ont un axe longitudinal sensiblement parallèle à l'axe Y. Les deux biellettes 32a, 32b présentent une extrémité E41 liée au sommet de fixation 31 du triangle de la plaque double 29 par une liaison 33 pivot d'axe X. Les deux biellettes 32a, 32b présentent également une extrémité E42 destinée à être liée par une liaison pivot 34 d'axe X à une plaque verticale 35 fixée au réservoir 2 (figure 9 et figure 10). L'utilisation de deux biellettes 32a et 32b permet de diviser en deux chemins d'effort les efforts F10, F11 exercés sur les deux biellettes 32a et 32b par le réservoir 2 fixé au dispositif de fixation 14 : une première partie des efforts s'exerce sur une première biellette 32a et une deuxième partie des efforts s'exerce sur la deuxième biellette 32b. Ainsi, s'il survient une rupture d'une des deux biellettes 32a ou 32b, l'autre biellette 32b ou 32a (qui ne s'est pas rompue) a la capacité à reprendre tous les efforts. De préférence, les extrémités E41 des deux biellettes 32a et 32b prennent en sandwich le sommet de fixation 31 du triangle de la plaque double 29. Les extrémités E42 des deux biellettes 32a et 32b sont configurées pour prendre en sandwich la plaque verticale 35 fixée au réservoir 2.

Dans un mode de réalisation préférée, la structure supérieure 7 comprend une paire de panneaux supérieurs 70, 71 s'écartant symétriquement de part et d'autre du plan de symétrie vertical P1 à partir d'une arête longitudinale 72, 73 respective du côté supérieur 9 du caisson longitudinal 4 jusqu'à un bord supérieur 74, 75.

Chacun des panneaux supérieurs 70, 71 comporte des raidisseurs 76 perpendiculaires à l'axe X. Chacun des deux dispositifs de fixation 12 de chacune des au moins deux ossatures de fixation 11 est fixé à un raidisseur 76 d'un panneau supérieur 70, 71 respectif. Par exemple, les extrémités E21 de la poutre 17 et E22 de la poutre 18 d'un dispositif de fixation 12 sont fixées au même raidisseur 76 d'un panneau supérieur 70, 71.

Dans ce mode de réalisation préférée, la structure inférieure 8 comprend une paire de panneaux inférieurs 80, 81 s'écartant symétriquement de part et d'autre du plan de symétrie vertical P1 à partir d'une arête longitudinale 82, 83 respective du côté inférieur 10 du caisson longitudinal 4. Chacun des panneaux inférieurs 80, 81 comportant des raidisseurs 86 perpendiculaires à l'axe X. Chacun des au moins deux dispositifs de fixation 14 est fixé à un raidisseur 86 d'un panneau inférieur 80, 81 respectif. Par exemple, le côté de fixation 30 du triangle de la plaque double 29 est fixé à un raidisseur 86.

Selon un mode de réalisation, pour une même ossature de fixation 11, le raidisseur 86 auquel un dispositif de fixation 14 est fixé est dans le prolongement du raidisseur 76 auquel un dispositif de fixation 12 est fixé.

Par ailleurs, la structure supérieure 7 peut comprendre des arceaux 77 fixés au bord supérieur 74, 75 des panneaux supérieurs 70, 71 pour relier entre eux les bords supérieurs des deux panneaux supérieurs 70, 71. Chacun des arceaux 77 est compris dans un plan comprenant un raidisseur 76 de chacun des panneaux supérieurs 70, 71 (figure 2).

Chacune des au moins deux ossatures de fixation 11 peuvent comprend une ferme 36 entre les deux panneaux supérieurs 70, 71. Une ferme correspond un ensemble de poutres 37 et 38 assemblées dans un plan vertical perpendiculaire à l'axe X (figure 5).

La ferme 36 comporte un entrait 37 fixé aux deux panneaux supérieurs 70, 71 dans le prolongement de la poutre 18 de la potence double 16 de chaque dispositif de fixation 12 de part et d'autre du plan de symétrie vertical P1.

La ferme comporte également deux contrefiches 38 symétriquement disposées selon le plan de symétrie vertical P1. Chacune des deux contrefiches 38 présente une extrémité E51 fixée à un arceau 77 qui se trouve dans un plan comprenant la potence double 16. Chacune des deux contrefiches 38 présente une extrémité E52 fixée au panneau supérieur 70, 71 respectif.

L'ensemble comprenant une ferme 36, un arceau 77, les panneaux supérieurs 70, 71 et les potences doubles 16 forme une structure isostatique (autrement appelée structure « isogrid ») qui permet de répartir les efforts F1, F2, F3, F4 et F5 exercés par le ou les réservoirs 2. Cette structure isostatique permet au système de fixation 1 de pouvoir être utilisé avec deux réservoirs 2 fixés côte à côte au système de fixation 1 ou avec un seul réservoir 2 fixé au système de fixation 1 d'un côté ou de l'autre du plan de symétrie vertical P1.

Par ailleurs, le caisson longitudinal 4 comprend au moins un voile central 39 liant les deux plaques longitudinales 5, 6 du caisson longitudinal 4. Le voile central 39 est compris dans le plan médian horizontal P3 du caisson longitudinal 4. Ce voile central 39 est apte à absorber les charges F6, F7 transmises par les au moins deux dispositifs de fixation 13.

Avantageusement, le voile central 39 présente deux bords latéraux 40 parallèles à l'axe X et perpendiculaires à l'axe Y (figure 8). Ces deux bords latéraux 40 sont fixés aux plaques longitudinales 5, 6 du caisson longitudinal 4.

Le voile central 39 peut comprendre une ouverture circulaire 44. De préférence, l'ouverture circulaire 44 comprend un centre confondu avec le centre du voile central 39. Cette ouverture circulaire 44 permet d'alléger l'ossature de fixation 11. Le voile central 39 peut être renforcé par une nervure circulaire 45 qui fait saillie sur une surface du voile central 39 en suivant le bord de l'ouverture circulaire 44.

En outre, le caisson longitudinal 4 comprend au moins une paire de voiles transversaux associée à un voile central 39 ou à chacun des voiles centraux 39. La ou les paires de voiles transversaux comportent un voile transversal 41 et un voile transversal 42 reliant les deux plaques longitudinales 5, 6 du ou des voiles centraux 39 associés selon l'axe X (figure 7). Le voile transversal 41 et le voile transversal 42 sont perpendiculaires à l'axe X. Afin de fixer les voiles transversaux 41 et 42, chacune des au moins deux ossatures de fixation 11 peut comprendre au moins deux paires de cornières 43. Chaque paire de cornières 43 permettent de fixer les voiles transversaux 41 et 42 aux deux plaques longitudinales 5 et 6.

Au moins un des voiles transversaux 41, 42 peut comprendre une ouverture circulaire 46. De préférence, l'ouverture circulaire 46 comprend un centre confondu avec le centre du ou des voiles transversaux 41, 42. Cette ouverture circulaire 46 permet d'alléger le système de fixation 1. Le ou les voiles transversaux 41, 42 peuvent être renforcés par une nervure circulaire 47 qui fait saillie sur une surface du ou des voiles transversaux 41, 42 en suivant le bord de l'ouverture circulaire 46. Dans un mode de réalisation tel que représenté sur la figure 6, le système de fixation 1 comprend deux ossatures de fixation 11 disposées chacune à une extrémité de la structure supérieure 7. D'autres ossatures de fixation 11 peuvent être également disposées entre les deux ossatures de fixation 11 disposées aux extrémités de la structure supérieure 7. Dans ce mode de réalisation, le système de fixation 1 comprend deux dispositifs de fixation 13 (symétriques par rapport au plan de symétrie verticale P1) et deux dispositifs de fixation 14 (symétriques par rapport au plan de symétrie verticale P1) configurés de façon que le point de fixation 151 et le point de fixation 152 soient en outre compris sensiblement dans un plan perpendiculaire à l'axe X qui comprend le centre de gravité CG du ou des réservoirs 2 destinés à être fixés au système de fixation 1.

Dans un autre mode de réalisation, le système de fixation 1 comprend deux ossatures de fixation 11 disposées chacune à une extrémité de la structure supérieure 7. D'autres ossatures de fixation 11 peuvent être également disposées entre les deux ossatures de fixation 11 disposées aux extrémités de la structure supérieure 7. Dans ce mode de réalisation, pour chaque ossature de fixation 11, le système de fixation 1 comprend deux dispositifs de fixation 13 (symétriques par rapport au plan de symétrie verticale P1) associé à une ossature de fixation 11 et deux dispositifs 14 (symétriques par rapport au plan de symétrie verticale P1) associé à une ossature de fixation 11. Les dispositifs de fixation 13 et 14 sont configurés pour que le point de fixation 151 et le point de fixation 152 des dispositifs de fixation 13 et 14 soient en outre compris sensiblement dans un plan perpendiculaire à l'axe X qui comprend l'ossature de fixation 11 associée.

## Revendications

1. Système de fixation configuré pour fixer au moins un réservoir (2) prévu pour contenir de l'hydrogène liquide, le ou les réservoirs (2) présentant un centre de gravité (CG), le système de fixation (1) étant destiné à être intégré dans un corps de fuselage (3) d'un aéronef (AC), le système de fixation (1) présentant un plan de symétrie verticale (P1), le système de fixation (1) étant lié à un repère orthogonal (R) défini par un axe X destiné à être parallèle à un axe longitudinal (A1) du corps de fuselage (3), un axe Y horizontal et un axe Z vertical,
**caractérisé en ce qu'**il comprend :
- un caisson longitudinal (4) s'étendant parallèlement à l'axe X, le caisson longitudinal (4) présentant un plan médian vertical longitudinal (P2) confondu avec le plan de symétrie vertical (P1) du système de fixation (1), le caisson longitudinal (4) présentant un plan médian horizontal (P3) destiné à comprendre le centre de gravité du ou des réservoirs (2), le caisson longitudinal (4) comprenant au moins deux plaques longitudinales (5, 6) parallèles au plan de symétrie vertical (P1),
- une structure supérieure (7) fixée sur un côté supérieur (9) du caisson longitudinal (4),
- une structure inférieure (8) fixée sur un côté inférieur (10) du caisson longitudinal (4),
- au moins deux ossatures de fixation (11) réparties le long de l'axe X, chacune des au moins deux ossatures de fixation (11) comprenant symétriquement, de part et d'autre du plan de symétrie vertical (P1) deux premiers dispositifs de fixation (12) configurés pour lier un réservoir (2) à la structure supérieure (7) par une liaison pivot glissant (15) d'axe pivot (A2) parallèle à l'axe X, l'axe pivot (A2) étant configuré pour être compris dans un plan (P2) perpendiculaire à l'axe Z comportant le centre de gravité (CG) du réservoir (2) ;
le système de fixation (1) comprenant en outre symétriquement, de part et d'autre du plan de symétrie vertical (P1) :
- au moins deux deuxièmes dispositifs de fixation (13) symétriques configurés pour lier un premier point de fixation (151) du réservoir (2) au caisson longitudinal (4), le premier point de fixation (151) étant configuré pour être compris dans le plan médian horizontal (P3) du caisson longitudinal (4),
- au moins deux troisièmes dispositifs de fixation (14) symétriques configurés pour lier un deuxième point de fixation (152) du réservoir (2) à la structure inférieure (8).

2. Système selon la revendication 1,
**caractérisé en ce que** chacun des deux premiers dispositifs de fixation (12) comprend une potence double (16) fixée sur la structure supérieure (7), la potence double (16) comportant une première poutre (17) et une deuxième poutre (18) formant un V, le V étant compris dans un plan perpendiculaire à l'axe X, la première poutre (17) et la deuxième poutre (18) comportant chacune une première extrémité (E11, E12), la première extrémité (E11) de la première poutre (17) et la première extrémité (E12) de la deuxième poutre (18) se rejoignant à un sommet (19) du V, la première poutre (17) présentant une deuxième extrémité (E21) fixée à une extrémité supérieure (E7) de la structure supérieure (7),
la deuxième poutre (18) présentant une deuxième extrémité (E22) fixée à la structure supérieure (7) de façon que la deuxième poutre (18) soit parallèle à l'axe Y,
le sommet (19) du V étant configuré pour être fixé à une chape (20) d'axe X fixée au réservoir (2).

3. Système selon l'une quelconque des revendications 1 et 2,
**caractérisé en ce que** chacun des au moins deux deuxièmes dispositifs de fixation (13) comprend :
- une première plaque double (21) en forme de triangle compris dans un plan médian horizontal (P3) du caisson longitudinal (4), la première plaque double (21) étant fixée au caisson longitudinal (4) par un côté de fixation (22) du triangle de la première plaque double (21), le côté de fixation (22) étant opposé à un sommet de fixation (23) du triangle,
- deux premières biellettes (24a, 24b) parallèles à l'axe X, les deux premières biellettes (24a, 24b) présentant une première extrémité (E31) liée au sommet de fixation (23) du triangle par une première liaison (25) pivot d'axe Z, les deux premières biellettes (24a, 24b) présentant une deuxième extrémité (E32) destinée à être liée par une deuxième liaison (26) pivot d'axe Z à une plaque horizontale (27) fixée au réservoir (2).

4. Système selon la revendication 3,
**caractérisé en ce que** chacun des au moins deux deuxièmes dispositifs de fixation (13) comprend une cornière de fixation (28), la cornière de fixation (28) fixant la première plaque double (21) à une plaque longitudinale (5, 6) respective du caisson longitudinal (4).

5. Système selon l'une quelconque des revendications 1 à 4,
**caractérisé en ce que** chacun des au moins deux troisièmes dispositifs de fixation (14) comprend :
- une deuxième plaque double (29) en forme de triangle compris dans un plan vertical perpendiculaire à l'axe X, la deuxième plaque double (29) étant fixée à la structure inférieure (8) par un côté de fixation (30) du triangle de la deuxième plaque double (29), le côté de fixation (30) étant opposé à un sommet de fixation (31) du triangle,
- deux deuxièmes biellettes (32a, 32b) parallèles à l'axe Y, les deux deuxièmes biellettes (32a, 32b) présentant une première extrémité (E41) liée au sommet de fixation (31) du triangle par une première liaison pivot (33) d'axe X, les deux deuxièmes biellettes (32a, 32b) présentant une deuxième extrémité (E42) destinée à être liée par une deuxième liaison pivot (34) d'axe X à une plaque verticale (35) fixée au réservoir (2).

6. Système selon les revendications 3 à 5,
**caractérisé en ce que** les premières extrémités (E31) des deux premières biellettes (24a, 24b) prennent en sandwich le sommet de fixation (23) du triangle de la première plaque double (21), les deuxièmes extrémités (E32) des deux premières biellettes (24a, 24b) étant configurées pour prendre en sandwich la plaque horizontale (27) fixée au réservoir (2),
les premières extrémités (E41) des deux deuxièmes biellettes (32a, 32b) prenant en sandwich le sommet de fixation (31) du triangle de la deuxième plaque double (29), les deuxièmes extrémités (E42) des deux deuxièmes biellettes (32a, 32b) étant configurées pour prendre en sandwich la plaque verticale (35) fixée au réservoir (2).

7. Système selon l'une quelconque des revendications 1 à 6,
**caractérisé en ce que** la structure supérieure (7) comprend une paire de panneaux supérieurs (70, 71) s'écartant symétriquement de part et d'autre du plan de symétrie vertical (P1) à partir d'une arête longitudinale (72, 73) respective du côté supérieur (9) du caisson longitudinal (4) jusqu'à un bord supérieur (74, 75), chacun des panneaux supérieurs (70, 71) comportant des raidisseurs (76) perpendiculaires à l'axe X, chacun des deux premiers dispositifs de fixation (12) de chacune des au moins deux ossatures de fixation (11) étant fixé à un raidisseur (76) d'un panneau supérieur (70, 71) respectif,
la structure inférieure (8) comprenant une paire de panneaux inférieurs (80, 81) s'écartant symétriquement de part et d'autre du plan de symétrie vertical (P1) à partir d'une arête longitudinale (82, 83) respective du côté inférieur (10) du caisson longitudinal (4), chacun des panneaux inférieurs (80, 81) comportant des raidisseurs (86) perpendiculaires à l'axe X, chacun des au moins deux troisièmes dispositifs de fixation (14) étant fixé à un raidisseur (86) d'un panneau inférieur (80, 81) respectif.

8. Système selon la revendication 7,
**caractérisé en ce que** la structure supérieure (7) comprend des arceaux (77) fixés au bord supérieur (74, 75) des panneaux supérieurs (70, 71) pour relier entre eux les panneaux supérieurs (70, 71), chacun des arceaux (77) étant compris dans un plan comprenant un raidisseur (76) de chacun des panneaux supérieurs (70, 71).

9. Système selon l'une quelconque des revendications 7 et 8 ;
**caractérisé en ce que** chacune des au moins deux ossatures de fixation (11) comprend une ferme (36) entre les deux panneaux supérieurs (70, 71), la ferme (36) comportant :
- un entrait (37) fixé aux deux panneaux supérieurs (70, 71) dans le prolongement de la deuxième poutre (18) de la potence double (16) du premier dispositif de fixation (12) de part et d'autre du plan de symétrie vertical (P1),
- deux contrefiches (38) symétriquement disposées selon le plan de symétrie vertical (P1), chacune des deux contrefiches (38) présentant une première extrémité (E51) fixée à un arceau (77) qui se trouve dans un plan comprenant la potence double (16), chacune des deux contrefiches (38) présentant une deuxième extrémité (E52) fixée au panneau supérieur (70, 71) respectif.

10. Système selon l'une quelconque des revendications 1 à 8,
**caractérisé en ce que** le caisson longitudinal (4) comprend un voile central (39) liant les deux plaques longitudinales (5, 6), le voile central (39) étant compris dans le plan médian horizontal (P3) du caisson longitudinal (4) entre deux premières plaques doubles (21) de deux deuxièmes dispositifs de fixation (13) symétriques par rapport au plan de symétrie vertical (P1).

11. Système selon la revendication 10,
**caractérisé en ce que** le voile central (39) présente deux bords latéraux (40) parallèles à l'axe X et perpendiculaires à l'axe Y, les deux bords latéraux (40) étant fixés aux plaques longitudinales (5, 6) du caisson longitudinal (4).

12. Système selon l'une quelconque des revendications 1 à 11,
**caractérisé en ce que** le caisson longitudinal (4) comprend au moins une paire de voiles transversaux associée à un voile central 39 ou à chacun des voiles centraux 39, le ou les paires de voiles transversaux comportant un premier voile transversal (41) et un deuxième voile transversal (42) reliant les deux plaques longitudinales (5, 6) de part et d'autre du ou des voiles centraux (39) associés selon l'axe X, le premier voile transversal (41) et le deuxième voile transversal (42) étant perpendiculaires à l'axe X.

13. Fuselage d'un aéronef,
**caractérisé en ce qu'**il comprend un système de fixation (1) selon l'une quelconque des revendications 1 à 12, le système de fixation (1) étant intégré dans le fuselage (F).

14. Aéronef,
comportant un fuselage (F) intégrant un système de fixation (1) selon l'une quelconque des revendications 1 à 12.

15. Aéronef selon la revendication 14,
**caractérisé en ce qu'**il comprend au moins un réservoir (2) prévu pour contenir de l'hydrogène liquide, le ou les réservoirs étant fixés au système de fixation (1).

## Patentansprüche

1. Befestigungssystem, das dafür konfiguriert ist, mindestens einen Tank (2), der dafür vorgesehen ist, flüssigen Wasserstoff zu enthalten, zu befestigen, wobei der oder die Tanks (2) einen Schwerpunkt (CG) aufweisen, wobei das Befestigungssystem (1) bestimmungsgemäß in einen Rumpfkörper (3) eines Luftfahrzeugs (AC) integriert werden soll, wobei das Befestigungssystem (1) eine vertikale Symmetrieebene (P1) aufweist, wobei das Befestigungssystem (1) mit einem orthogonalen Bezugssystem (R) verbunden ist, das durch eine X-Achse, die bestimmungsgemäß zu einer Längsachse (A1) des Rumpfkörpers (3) parallel sein soll, eine horizontale Y-Achse und eine vertikale Z-Achse definiert ist, **dadurch gekennzeichnet, dass** es umfasst:
- einen Längskasten (4), der sich parallel zur X-Achse erstreckt, wobei der Längskasten (4) eine vertikale Längsmittelebene (P2) aufweist, die mit der vertikalen Symmetrieebene (P1) des Befestigungssystems (1) zusammenfällt, wobei der Längskasten (4) eine horizontale Mittelebene (P3) aufweist, die bestimmungsgemäß den Schwerpunkt des oder der Tanks (2) umfassen soll, wobei der Längskasten (4) mindestens zwei Längsplatten (5, 6) umfasst, die zur vertikalen Symmetrieebene (P1) parallel sind,
- eine obere Struktur (7), die an einer oberen Seite (9) des Längskastens (4) befestigt ist,
- eine untere Struktur (8), die an einer unteren Seite (10) des Längskastens (4) befestigt ist,
- mindestens zwei Befestigungsgerüste (11), die entlang der X-Achse verteilt sind, wobei jedes der mindestens zwei Befestigungsgerüste (11) symmetrisch, auf beiden Seiten der vertikalen Symmetrieebene (P1), zwei erste Befestigungsvorrichtungen (12) umfasst, die so konfiguriert sind, dass sie einen Tank (2) über eine verschiebbare Schwenkverbindung (15), deren Schwenkachse (A2) zur X-Achse parallel ist, mit der oberen Struktur (7) verbinden, wobei die Schwenkachse (A2) so konfiguriert ist, dass sie in einer Ebene (P2) umfasst ist, die zur Z-Achse, die den Schwerpunkt (CG) des Tanks (2) umfasst, senkrecht ist;
wobei das Befestigungssystem (1) weiter symmetrisch, auf beiden Seiten der vertikalen Symmetrieebene (P1), umfasst:
- mindestens zwei symmetrische zweite Befestigungsvorrichtungen (13), die so konfiguriert sind, dass sie einen ersten Befestigungspunkt (151) des Tanks (2) mit dem Längskasten (4) verbinden, wobei der erste Befestigungspunkt (151) so konfiguriert ist, dass er in der horizontalen Mittelebene (P3) des Längskastens (4) umfasst ist,
- mindestens zwei symmetrische dritte Befestigungsvorrichtungen (14), die so konfiguriert sind, dass sie einen zweiten Befestigungspunkt (152) des Tanks (2) mit der unteren Struktur (8) verbinden.

2. System nach Anspruch 1,
**dadurch gekennzeichnet, dass** jede der zwei ersten Befestigungsvorrichtungen (12) einen Doppelausleger (16) umfasst, der an der oberen Struktur (7) befestigt ist, wobei der Doppelausleger (16) einen ersten Balken (17) und einen zweiten Balken (18) umfasst, die ein V bilden, wobei das V in einer Ebene umfasst ist, die zur X-Achse senkrecht ist, wobei der erste Balken (17) und der zweite Balken (18) jeweils ein erstes Ende (E11, E12) umfassen, wobei das erste Ende (E11) des ersten Balkens (17) und das erste Ende (E12) des zweiten Balkens (18) sich an einem Scheitel (19) des V treffen, wobei der erste Balken (17) ein zweites Ende (E21) aufweist, das an einem oberen Ende (E7) der oberen Struktur (7) befestigt ist,
wobei der zweite Balken (18) ein zweites Ende (E22) aufweist, das so an der oberen Struktur (7) befestigt ist, dass der zweite Balken (18) zur Y-Achse parallel ist,
wobei der Scheitel (19) des V so konfiguriert ist, dass er an einem X-Achsen-Gabelkopf (20), der am Tank (2) befestigt ist, befestigt werden kann.

3. System nach einem der Ansprüche 1 und 2,
**dadurch gekennzeichnet, dass** jede der mindestens zwei zweiten Befestigungsvorrichtungen (13) umfasst:
- eine erste Doppelplatte (21) in Form eines Dreiecks, die in einer horizontalen Mittelebene (P3) des Längskastens (4) umfasst ist, wobei die erste Doppelplatte (21) über eine Befestigungsseite (22) des Dreiecks der ersten Doppelplatte (21) am Längskasten (4) befestigt ist, wobei die Befestigungsseite (22) einem Befestigungsscheitel (23) des Dreiecks gegenüberliegt,
- zwei erste Stangen (24a, 24b), die zur X-Achse parallel sind, wobei die zwei ersten Stangen (24a, 24b) ein erstes Ende (E31) aufweisen, das über eine erste Z-Achsen-Schwenkverbindung (25) mit dem Befestigungsscheitel (23) des Dreiecks verbunden ist, wobei die zwei ersten Stangen (24a, 24b) ein zweites Ende (E32) aufweisen, das bestimmungsgemäß über eine zweite Z-Achsen-Schwenkverbindung (26) mit einer horizontalen Platte (27), die am Tank (2) befestigt ist, verbunden werden soll.

4. System nach Anspruch 3,
**dadurch gekennzeichnet, dass** jede der mindestens zwei zweiten Befestigungsvorrichtungen (13) eine Befestigungswinkelleiste (28) umfasst, wobei die Befestigungswinkelleiste (28) die erste Doppelplatte (21) an einer jeweiligen Längsplatte (5, 6) des Längskastens (4) befestigt.

5. System nach einem der Ansprüche 1 bis 4,
**dadurch gekennzeichnet, dass** jede der mindestens zwei dritten Befestigungsvorrichtungen (14) umfasst:
- eine zweite Doppelplatte (29) in Form eines Dreiecks, die in einer vertikalen Ebene, die zur X-Achse senkrecht ist, umfasst ist, wobei die zweite Doppelplatte (29) über eine Befestigungsseite (30) des Dreiecks der zweiten Doppelplatte (29) an der unteren Struktur (8) befestigt ist, wobei die Befestigungsseite (30) einem Befestigungsscheitel (31) des Dreiecks gegenüberliegt,
- zwei zweite Stangen (32a, 32b), die zur Y-Achse parallel sind, wobei die zwei zweiten Stangen (32a, 32b) ein erstes Ende (E41) aufweisen, das über eine erste X-Achsen-Schwenkverbindung (33) mit dem Befestigungsscheitel (31) des Dreiecks verbunden ist, wobei die zwei zweiten Stangen (32a, 32b) ein zweites Ende (E42) aufweisen, das bestimmungsgemäß über eine zweite X-Achsen-Schwenkverbindung (34) mit einer vertikalen Platte (35), die am Tank (2) befestigt ist, verbunden werden soll.

6. System nach den Ansprüchen 3 bis 5,
**dadurch gekennzeichnet, dass** die ersten Enden (E31) der zwei ersten Stangen (24a, 24b) den Befestigungsscheitel (23) des Dreiecks der ersten Doppelplatte (21) sandwichartig zwischen sich aufnehmen, wobei die zweiten Enden (E32) der zwei ersten Stangen (24a, 24b) so konfiguriert sind, dass sie die horizontale Platte (27), die am Tank (2) befestigt ist, sandwichartig zwischen sich aufnehmen,
wobei die ersten Enden (E41) der zwei zweiten Stangen (32a, 32b) den Befestigungsscheitel (31) des Dreiecks der zweiten Doppelplatte (29) sandwichartig zwischen sich aufnehmen, wobei die zweiten Enden (E42) der zwei zweiten Stangen (32a, 32b) so konfiguriert sind, dass sie die vertikale Platte (35), die am Tank (2) befestigt ist, sandwichartig zwischen sich aufnehmen.

7. System nach einem der Ansprüche 1 bis 6,
**dadurch gekennzeichnet, dass** die obere Struktur (7) ein Paar obere Paneele (70, 71) umfasst, die sich symmetrisch auf beiden Seiten der vertikalen Symmetrieebene (P1) von einer jeweiligen Längskante (72, 73) der oberen Seite (9) des Längskastens (4) bis zu einem oberen Rand (74, 75) beabstanden, wobei jedes der oberen Paneele (70, 71) Versteifungen (76) umfasst, die zur X-Achse senkrecht sind, wobei jede der zwei ersten Befestigungsvorrichtungen (12) jedes der mindestens zwei Befestigungsgerüste (11) an einer Versteifung (76) eines jeweiligen oberen Paneels (70, 71) befestigt ist,
wobei die untere Struktur (8) ein Paar untere Paneele (80, 81) umfasst, die sich symmetrisch auf beiden Seiten der vertikalen Symmetrieebene (P1) von einer jeweiligen Längskante (82, 83) der unteren Seite (10) des Längskastens (4) beabstanden, wobei jedes der unteren Paneele (80, 81) Versteifungen (86) umfasst, die zur X-Achse senkrecht sind, wobei jede der mindestens zwei dritten Befestigungsvorrichtungen (14) an einer Versteifung (86) eines jeweiligen unteren Paneels (80, 81) befestigt ist.

8. System nach Anspruch 7,
**dadurch gekennzeichnet, dass** die obere Struktur (7) Bügel (77) umfasst, die am oberen Rand (74, 75) der oberen Paneele (70, 71) befestigt sind, um die oberen Paneele (70, 71) miteinander zu verbinden, wobei jeder der Bügel (77) in einer Ebene umfasst ist, die eine Versteifung (76) jedes der oberen Paneele (70, 71) umfasst.

9. System nach einem der Ansprüche 7 und 8;
**dadurch gekennzeichnet, dass** jedes der mindestens zwei Befestigungsgerüste (11) einen Binder (36) zwischen den zwei oberen Paneelen (70, 71) umfasst, wobei der Binder (36) umfasst:
- eine Querstrebe (37), die an den zwei oberen Paneelen (70, 71) befestigt ist, in der Verlängerung des zweiten Balkens (18) des Doppelauslegers (16) der ersten Befestigungsvorrichtung (12) auf beiden Seiten der vertikalen Symmetrieebene (P1),
- zwei Schrägstreben (38), die symmetrisch in der vertikalen Symmetrieebene (P1) angeordnet sind, wobei jede der zwei Schrägstreben (38) ein erstes Ende (E51) aufweist, das an einem Bügel (77) befestigt ist, der in einer Ebene liegt, die den Doppelausleger (16) umfasst, wobei jede der zwei Schrägstreben (38) ein zweites Ende (E52) aufweist, das am jeweiligen oberen Paneel (70, 71) befestigt ist.

10. System nach einem der Ansprüche 1 bis 8,
**dadurch gekennzeichnet, dass** der Längskasten (4) einen Zentralsteg (39) umfasst, der die zwei Längsplatten (5, 6) verbindet, wobei der Zentralsteg (39) in der horizontalen Mittelebene (P3) des Längskastens (4) zwischen zwei ersten Doppelplatten (21) von zwei zweiten Befestigungsvorrichtungen (13), die in Bezug auf die vertikale Symmetrieebene (P1) symmetrisch sind, umfasst ist.

11. System nach Anspruch 10,
**dadurch gekennzeichnet, dass** der Zentralsteg (39) zwei Seitenränder (40) aufweist, die zur X-Achse parallel und zur Y-Achse senkrecht sind, wobei die zwei Seitenränder (40) an den Längsplatten (5, 6) des Längskastens (4) befestigt sind.

12. System nach einem der Ansprüche 1 bis 11,
**dadurch gekennzeichnet, dass** der Längskasten (4) mindestens ein Paar Querstege umfasst, das einem Zentralsteg 39 oder jedem der Zentralstege 39 zugeordnet ist, wobei das oder die Querstege-Paare einen ersten Quersteg (41) und einen zweiten Quersteg (42) umfassen, die die zwei Längsplatten (5, 6) auf beiden Seiten des oder der zugehörigen Zentralstege (39) entlang der X-Achse verbinden, wobei der erste Quersteg (41) und der zweite Quersteg (42) zur X-Achse senkrecht sind.

13. Rumpf eines Luftfahrzeugs,
**dadurch gekennzeichnet, dass** er ein Befestigungssystem (1) nach einem der Ansprüche 1 bis 12 umfasst, wobei das Befestigungssystem (1) in den Rumpf (F) integriert ist.

14. Luftfahrzeug,
das einen Rumpf (F) umfasst, in den ein Befestigungssystem (1) nach einem der Ansprüche 1 bis 12 integriert ist.

15. Luftfahrzeug nach Anspruch 14,
**dadurch gekennzeichnet, dass** es mindestens einen Tank (2) umfasst, der dafür vorgesehen ist, flüssigen Wasserstoff zu enthalten, wobei der oder die Tanks am Befestigungssystem (1) befestigt sind.

## Claims

1. A fastening system configured to fasten at least one tank (2) intended to contain liquid hydrogen, the tank or tanks (2) having a center of gravity (CG), the fastening system (1) being intended to be integrated into a fuselage body (3) of an aircraft (AC), the fastening system (1) having a vertical plane of symmetry (P1), the fastening system (1) being linked to an orthogonal frame of reference (R) defined by an axis X intended to be parallel to a longitudinal axis (A1) of the fuselage body (3), a horizontal axis Y and a vertical axis Z, wherein it comprises:
- a longitudinal box (4) extending parallel to the axis X, the longitudinal box (4) having a longitudinal vertical median plane (P2) that is coincident with the vertical plane of symmetry (P1) of the fastening system (1), the longitudinal box (4) having a horizontal median plane (P3) intended to comprise the center of gravity of the tank or tanks (2), the longitudinal box (4) comprising at least two longitudinal plates (5, 6) that are parallel to the vertical plane of symmetry (P1),
- an upper structure (7) fastened to an upper side (9) of the longitudinal box (4),
- a lower structure (8) fastened to a lower side (10) of the longitudinal box (4),
- at least two fastening frames (11) distributed along the axis X, each of the at least two fastening frames (11) comprising symmetrically, on either side of the vertical plane of symmetry (P1), two first fastening devices (12) that are configured to connect a tank (2) to the upper structure (7) by means of a sliding pivot connection (15) of pivot axis (A2) parallel to the axis X, the pivot axis (A2) being configured to be comprised in a plane (P2) perpendicular to the axis Z comprising the center of gravity (CG) of the tank (2);
the fastening system (1) further comprising symmetrically, on either side of the vertical plane of symmetry (P1):
- at least two second symmetrical fastening devices (13) that are configured to connect a first fastening point (151) of the tank (2) to the longitudinal box (4), the first fastening point (151) being configured to be comprised in the horizontal median plane (P3) of the longitudinal box (4),
- at least two third symmetrical fastening devices (14) that are configured to connect a second fastening point (152) of the tank (2) to the lower structure (8).

2. The system as claimed in claim 1,
wherein each of the two first fastening devices (12) comprises a double bracket (16) fastened to the upper structure (7), the double bracket (16) comprising a first beam (17) and a second beam (18) forming a V, the V being comprised in a plane perpendicular to the axis X, the first beam (17) and the second beam (18) each comprising a first end (E11, E12), the first end (E11) of the first beam (17) and the first end (E12) of the second beam (18) meeting at a vertex (19) of the V,
the first beam (17) having a second end (E21) fastened to an upper end (E7) of the upper structure (7),
the second beam (18) having a second end (E22) fastened to the upper structure (7) such that the second beam (18) is parallel to the axis Y,
the vertex (19) of the V being configured to be fastened to a yoke (20) of axis X fastened to the tank (2).

3. The system as claimed in either one of claims 1 and 2,
wherein each of the at least two second fastening devices (13) comprises:
- a first double plate (21) in the form of a triangle comprised in a horizontal median plane (P3) of the longitudinal box (4), the first double plate (21) being fastened to the longitudinal box (4) by a fastening side (22) of the triangle of the first double plate (21), the fastening side (22) being opposite to a fastening vertex (23) of the triangle,
- two first link rods (24a, 24b) that are parallel to the axis X, the two first link rods (24a, 24b) having a first end (E31) connected to the fastening vertex (23) of the triangle by a first pivot connection (25) of axis Z, the two first link rods (24a, 24b) having a second end (E32) intended to be connected by a second pivot connection (26) of axis Z to a horizontal plate (27) fastened to the tank (2).

4. The system as claimed in claim 3,
wherein each of the at least two second fastening devices (13) comprises a fastening angle iron (28), the fastening angle iron (28) fastening the first double plate (21) to a respective longitudinal plate (5, 6) of the longitudinal box (4).

5. The system as claimed in any one of claims 1 to 4,
wherein each of the at least two third fastening devices (14) comprises:
- a second double plate (29) in the form of a triangle comprised in a vertical plane perpendicular to the axis X, the second double plate (29) being fastened to the lower structure (8) by a fastening side (30) of the triangle of the second double plate (29), the fastening side (30) being opposite to a fastening vertex (31) of the triangle,
- two second link rods (32a, 32b) that are parallel to the axis Y, the two second link rods (32a, 32b) having a first end (E41) connected to the fastening vertex (31) of the triangle by a first pivot connection (33) of axis X, the two second link rods (32a, 32b) having a second end (E42) intended to be connected by a second pivot connection (34) of axis X to a vertical plate (35) fastened to the tank (2).

6. The system as claimed in claims 3 to 5,
wherein the first ends (E31) of the two first link rods (24a, 24b) sandwich the fastening vertex (23) of the triangle of the first double plate (21), the second ends (E32) of the two first link rods (24a, 24b) being configured to sandwich the horizontal plate (27) fastened to the tank (2),
the first ends (E41) of the two second link rods (32a, 32b) sandwich the fastening vertex (31) of the triangle of the second double plate (29), the second ends (E42) of the two second link rods (32a, 32b) being configured to sandwich the vertical plate (35) fastened to the tank (2).

7. The system as claimed in any one of claims 1 to 6,
wherein the upper structure (7) comprises a pair of upper panels (70, 71) that deviate symmetrically, on either side of the vertical plane of symmetry (P1), proceeding from a respective longitudinal edge face (72, 73), from the upper side (9) of the longitudinal box (4) as far as an upper edge (74, 75), each of the upper panels (70, 71) comprising stiffeners (76) that are perpendicular to the axis X, each of the two first fastening devices (12) of each of the at least two fastening frames (11) being fastened to a stiffener (76) of a respective upper panel (70, 71),
the lower structure (8) comprising a pair of lower panels (80, 81) that deviate symmetrically, on either side of the vertical plane of symmetry (P1), proceeding from a respective longitudinal edge face (82, 83), from the lower side (10) of the longitudinal box (4), each of the lower panels (80, 81) comprising stiffeners (86) that are perpendicular to the axis X, each of the at least two third fastening devices (14) being fastened to a stiffener (86) of a respective lower panel (80, 81).

8. The system as claimed in claim 7,
wherein the upper structure (7) comprises arches (77) that are fastened to the upper edge (74, 75) of the upper panels (70, 71) so as to connect the upper panels (70, 71) to each other, each of the arches (77) being comprised in a plane comprising a stiffener (76) of each of the upper panels (70, 71).

9. The system as claimed in either one of claims 7 and 8,
wherein each of the at least two fastening frames (11) comprises a truss (36) between the two upper panels (70, 71), the truss (36) comprising:
- a tie beam (37) fastened to the two upper panels (70, 71) in the continuation of the second beam (18) of the double bracket (16) of the first fastening device (12) on either side of the vertical plane of symmetry (P1),
- two struts (38) that are disposed symmetrically with respect to the vertical plane of symmetry (P1), each of the two struts (38) having a first end (E51) fastened to an arch (77) which is located in a plane comprising the double bracket (16), each of the two struts (38) having a second end (E52) fastened to the respective upper panel (70, 71).

10. The system as claimed in any one of claims 1 to 8,
wherein the longitudinal box (4) comprises a central web (39) connecting the two longitudinal plates (5, 6), the central web (39) being comprised in the horizontal median plane (P3) of the longitudinal box (4) between two first double plates (21) of two second fastening devices (13) that are symmetrical with respect to the vertical plane of symmetry (P1).

11. The system as claimed in claim 10,
wherein the central web (39) has two lateral edges (40) that are parallel to the axis X and perpendicular to the axis Y, the two lateral edges (40) being fastened to the longitudinal plates (5, 6) of the longitudinal box (4).

12. The system as claimed in any one of claims 1 to 11,
wherein the longitudinal box (4) comprises at least one pair of transverse webs associated with a central web (39) or with each of the central webs (39), the pair or pairs of transverse webs comprising a first transverse web (41) and a second transverse web (42) connecting the two longitudinal plates (5, 6) on either side of the associated central web or webs (39) along the axis X, the first transverse web (41) and the second transverse web (42) being perpendicular to the axis X.

13. An aircraft fuselage,
wherein it comprises a fastening system (1) as claimed in any one of claims 1 to 12, the fastening system (1) being integrated into the fuselage (F).

14. An aircraft,
comprising a fuselage (F) into which a fastening system (1) as claimed in any one of claims 1 to 12 is integrated.

15. The aircraft as claimed in claim 14,
wherein it comprises at least one tank (2) intended to contain liquid hydrogen, the tank or tanks being fastened to the fastening system (1).
